# EUROPÄISCHE PATENTSCHRIFT

(11) **EP 2 647 101 B1**
(45) Veröffentlichungstag und Bekanntmachung des Hinweises auf die Patenterteilung: **02.08.2017**
(21) Anmeldenummer: 11790946.5
(22) Anmeldetag: 28.11.2011
(51) Int. Cl.: H02J 7/00, B60L 11/18

(54) **ENERGIESPEICHERVORRICHTUNG FÜR EIN KRAFTFAHRZEUG**
ENERGY STORAGE DEVICE FOR A MOTOR VEHICLE
DISPOSITIF DE STOCKAGE D'ÉNERGIE POUR UN VÉHICULE AUTOMOBILE

(30) Priorität: 29.11.2010 DE 102010062116
(43) Veröffentlichungstag der Anmeldung: 09.10.2013
(73) Patentinhaber: Bayerische Motoren Werke Aktiengesellschaft, 80809 München (DE)
(72) Erfinder: LAMP, Peter, 85774 Unterföhring (DE); STÖRMER, Andreas, 85716 Unterschleißheim (DE); HAFKEMEYER, Marcus, Jersey City New Jersey 07302 (US)
(86) Internationale Anmeldenummer: PCT/EP2011/071165
(87) Internationale Veröffentlichungsnummer: WO 2012/072573

(56) Entgegenhaltungen:
- WO-A1-2005/027345
- DE-A1-102010 000 656

## Beschreibung

Die Erfindung betrifft eine Energiespeichervorrichtung für ein Kraftfahrzeug mit einem ersten elektrischen Energiespeicher, der charakterisiert ist durch eine erste Spannungskennlinie, welche die Ruhespannung des ersten elektrischen Energiespeichers in Abhängigkeit von seinem relativen Ladezustand festlegt, sowie durch eine erste Widerstandskennlinie, welche den für einen Ladevorgang des ersten elektrischen Energiespeichers relevanten Innenwiderstand des ersten elektrischen Energiespeichers in Abhängigkeit von seinem relativen Ladezustand festlegt, und mit einem dem ersten elektrischen Energiespeicher parallel geschalteten zweiten elektrischen Energiespeicher, der charakterisiert ist durch eine zweite Spannungskennlinie, welche die Ruhespannung des zweiten elektrischen Energiespeichers in Abhängigkeit von seinem relativen Ladezustand festlegt, sowie durch eine zweite Widerstandskennlinie, welche den für einen Ladevorgang des zweiten elektrischen Energiespeichers relevanten Innenwiderstand des zweiten elektrischen Energiespeichers in Abhängigkeit von seinem relativen Ladezustand festlegt.

Durch die zunehmende Zahl elektrischer Verbraucher für Komfort- und Sicherheitsfunktionen und durch die aktive Einbindung des herkömmlichen Blei-Säure-Akkumulators als elektrischem Energiespeicher in hybride Fahrzeugfunktionen wird die zukünftige Ausführung des konventionellen 14-Volt-Bordnetzes in modernen Kraftfahrzeugen, insbesondere in Personenkraftwagen, künftig starken Veränderungen unterliegen. Beispielsweise werden vermehrt Funktionalitäten wie ein automatisches Abstellen und Starten des Motors während des Fahrzeugbetriebs sowie eine effiziente Bremsenergierückgewinnung im Schubbetrieb des Fahrzeugs umgesetzt. Die daraus resultierenden Herausforderungen für den Energiespeicher werden durch häufigere Entladephasen im Hochstrombereich verschärft, die auf in modernen Fahrzeugen elektrifizierte Zusatzaggregate zurückzuführen sind. Zum Beispiel können hier elektrische oder elektromechanische Verbraucher wie Elektromotoren für aktive Lenkungen oder Kühlkreislaufpumpen angeführt werden. Um die Verfügbarkeit von Verbraucherfunktionen zu erhöhen und die Lebensdauer des Energiespeichers zu verlängern, kann der Blei-Säure-Akkumulator beispielsweise durch einen geeigneteren Energiespeicher ersetzt werden oder das Bordnetz um einen weiteren Energiespeicher ergänzt und zu einem Zwei-Energiespeicher-Bordnetz erweitert werden.

Derartige Energiespeichervorrichtungen in einem Fahrzeugbordnetz sind im Stand der Technik als Zwei-Energiespeicher-Bordnetz erläutert. Beispielsweise wird im Dokument US 6,844,634 B2 eine Parallelschaltung eines Blei-Säure-Akkumulators mit einem Lithium-Ionen-Akkumulator als Grundlage für eine Regelung zur Erzeugung elektrischer Leistung im Fahrzeug beschrieben. Hierbei steht die Wechselwirkung von zwei Sensoren für die Akkumulatoren mit einem Steuergerät im Vordergrund. Weiterhin zeigt das Dokument WO 2005/027345 A1 eine Energiespeichervorrichtung in einem Fahrzeugbordnetz, die einer Last elektrische Leistung bei unterschiedlichen Leistungsraten bereitstellen kann. Die Energiespeichervorrichtung umfasst zwei Energiespeicher in Form einer energieoptimierten Batterie ("energy battery") und einer leistungsoptimierten Batterie ("power battery"), wobei die leistungsoptimierte Batterie durch die energieoptimierte Batterie nachladbar ist.

Es ist eine Aufgabe der vorliegenden Erfindung, eine verbesserte Energiespeichervorrichtung für ein Kraftfahrzeug mit zwei elektrischen Energiespeichern anzugeben.

Gelöst wird diese Aufgabe durch eine Energiespeichervorrichtung gemäß Anspruch 1. Vorteilhafte Ausführungsformen und Weiterbildungen der Erfindung ergeben sich aus den abhängigen Ansprüchen.

Erfindungsgemäß ist die Energiespeichervorrichtung gekennzeichnet durch eine teilweise Überlappung des Spannungswertebereichs, der von der Spannungskennlinie des ersten elektrischen Energiespeichers, hier als erste Spannungskennlinie bezeichnet, abgedeckt wird, mit dem Spannungswertebereich, der von der Spannungskennlinie des zweiten elektrischen Energiespeichers, hier als zweite Spannungskennlinie bezeichnet, abgedeckt wird. Unter einer teilweisen Überlappung der beiden Spannungswertebereiche ist im Rahmen des vorliegenden Dokuments zu verstehen, dass neben einer von Null verschiedenen Schnittmenge der beiden Spannungswertebereiche jeweils eine von Null verschiedene Teilmenge des Spannungswertebereichs existiert, die keine Teilmenge des anderen Spannungswertebereichs darstellt. Zudem weisen die Innenwiderstandskennlinie des ersten elektrischen Energiespeichers beim Laden, als erste Widerstandskennlinie bezeichnet, und die Innenwiderstandskennlinie des zweiten elektrischen Energiespeichers beim Laden, als zweite Widerstandskennlinie bezeichnet, genau einen Schnittpunkt auf, wobei bei Anliegen einer äußeren Ladespannung an der Energiespeichervorrichtung der erste elektrische Energiespeicher und der zweite elektrische Energiespeicher parallel geschaltet sind, um in Abhängigkeit von den relativen Ladezuständen das Laden des Energiespeichers mit dem geringeren Ladewiderstand zu bewirken.

Ein Vorteil der Erfindung liegt darin, dass eine Wechselwirkung der beiden elektrischen Energiespeicher hinsichtlich ihrer Spannungslagen und ihrer relativen Ladezustände entsteht. Nach den Kirchhoffschen Regeln ist zu jedem Zeitpunkt ein Ladestrom oder ein Entladestrom der Energiespeichervorrichtung durch die Addition der jeweiligen Lade- oder Entladeströme der beiden elektrischen Energiespeicher festgelegt. Im Sinne der Anwendbarkeit der Kirchhoffschen Regeln stellt die Parallelschaltung der beiden elektrischen Energiespeicher einen Knotenpunkt dar. Dabei ist die Einhaltung einer Vorzeichenkonvention für die beiden Richtungen des Stromflusses vorausgesetzt, d.h. für den Ladestrom als eine Flussrichtung (ein Vorzeichen) und den Entladestrom als die andere Flussrichtung (das andere Vorzeichen). Durch diese Wechselwirkung kann der technische Aufwand für den Betrieb der Energiespeichervorrichtung im Kraftfahrzeug minimiert werden. Der technische Aufwand für den Betrieb der Energiespeichervorrichtung im Kraftfahrzeug umfasst im Kontext des vorliegenden Dokuments beispielsweise Batteriesensoren für eine Überwachung von Spannungen und Strömen der beiden elektrischen Energiespeicher oder eine Regelung der Lade- und Entladeströme der beiden elektrischen Energiespeicher. Eine solche Regelung wird in der Kraftfahrzeugtechnik häufig als Betriebsstrategie von elektrischen Energiespeichern bezeichnet und in Form eines Softwaremoduls auf einem Steuergerät implementiert.

Die besondere Wechselwirkung der beiden elektrischen Energiespeicher ermöglicht die Umsetzung einer einfachen Betriebsstrategie mit hoher Funktionalität wie im Ausführungsbeispiel dieser Schrift erläutert wird.

Besonders vorteilhaft ist auch, dass durch die Wechselwirkung der beiden elektrischen Energiespeicher die Lebensdauer der Energiespeichereinrichtung optimiert werden kann.

Gemäß einer bevorzugten Ausführungsform der Erfindung verläuft die erste Widerstandskennlinie bei relativen Ladezuständen, die sich über dem Wert des relativen Ladezustands beim Schnittpunkt befinden, oberhalb der zweiten Widerstandskennlinie. Der Wert des relativen Ladezustands beim Schnittpunkt der beiden Widerstandskennlinien wird im weiteren Verlauf des Dokuments als kritischer Ladezustand bezeichnet. Mit anderen Worten ausgedrückt sind die Widerstandswerte der ersten Widerstandskennlinie für große Ladezustandswerte (größer als der kritische Ladezustand am Schnittpunkt der beiden Widerstandskennlinien) größer als die Widerstandswerte der zweiten Widerstandskennlinie.

Der besondere Vorteil dieser Ausführungsform liegt darin, dass im Falle des Anliegens einer äußeren Ladespannung an der Energiespeichervorrichtung, die beispielsweise von einem Bordnetzgenerator erzeugt sein kann, der zweite elektrische Energiespeicher einen geringeren Ladewiderstand als der erste elektrische Energiespeicher aufweist. Dies gilt zumindest dann, wenn der relative Ladezustand des ersten elektrischen Energiespeichers über dem kritischen Ladezustand liegt und der relative Ladezustand des zweiten elektrischen Energiespeichers unter dem kritischen Ladezustand liegt. Ein kurzzeitiger Ladepuls, wie beispielsweise bei modernen Funktionen zur Bremsenergierückgewinnung häufig auftretend, führt somit zu einer bevorzugten Ladung des zweiten elektrischen Energiespeichers.

Nach einer weiteren Variante der vorliegenden Erfindung wird die Energiespeichervorrichtung (bzw. werden die darin enthaltenen Energiespeicher) derart ausgelegt, dass der von der zweiten Spannungskennlinie abgedeckte Spannungswertebereich höhere Spannungswerte beinhaltet als der von der ersten Spannungskennlinie abgedeckte Spannungswertebereich.

Gemäß der dem Fachmann bekannten Gleichung nach Nernst wird ein stetiger, monoton steigender Verlauf der beiden Spannungskennlinien in Richtung größerer Spannungswerte und in Richtung größerer relativer Ladezustandswerte vorausgesetzt. Etwaige Abweichungen durch Überspannungspotentiale wirken im Kontext des vorliegenden Dokuments nicht beschränkend. In ihrem Verlauf schneiden sich die beiden Spannungskennlinien nicht.

Die Merkmale der beiden Spannungskennlinien haben zur Folge, dass bei der durch die Parallelschaltung bedingten gleichen Spannungslage der beiden elektrischen Energiespeicher der relative Ladezustand des ersten elektrischen Energiespeichers größer ist als der relative Ladezustand des zweiten elektrischen Energiespeichers.

Die Merkmale der beiden Spannungskennlinien haben zum Vorteil, dass bevorzugt der erste elektrische Energiespeicher vom zweiten elektrischen Energiespeicher geladen wird, wenn keine äußere Ladespannung an der Energiespeichervorrichtung anliegt. Im weiteren Verlauf des Dokuments wird dieser Effekt als interne Umladung bezeichnet. Außerdem kann nur dann ein Ladestrom vom zweiten zum ersten elektrischen Energiespeicher fließen (also eine interne Umladung stattfinden), wenn weder der erste elektrische Energiespeicher vollständig geladen noch der zweite elektrische Energiespeicher vollständig entladen ist. Mit anderen Worten ausgedrückt bedeutet dies, dass die durch die Parallelschaltung der beiden elektrischen Energiespeicher bedingte gleiche Spannungslage der beiden elektrischen Energiespeicher im Bereich der teilweisen Überlappung der beiden Spannungskennlinien liegt.

Nach einer Weiterbildung der vorliegenden Erfindung kann die Energiespeichervorrichtung so gestaltet werden, dass der erste elektrische Energiespeicher als Blei-Säure-Akkumulator ausgeführt ist und der zweite elektrische Energiespeicher als Lithium-Ionen-Akkumulator oder als Super-Kondensator ausgeführt ist.

Besonders vorteilhaft ist hierbei, dass der Blei-Säure-Akkumulator bevorzugt bei höheren relativen Ladezuständen betrieben wird als die Lithium-Ionen-Akkumulator oder der Super-Kondensator. Die Lebensdauer eines Blei-Säure-Akkumulators steigt in erster Näherung mit dem über einen längeren Einsatzzeitraum gemittelten relativen Ladezustand. Sofern eine derartige Betriebsstrategie der Energiespeichervorrichtung gewählt wird, dass der Blei-Säure-Akkumulator bei relativen Ladezustandswerten nahe der vollständigen Ladung betrieben wird, wird eine optimierte Verfügbarkeit der Energiespeichervorrichtung sichergestellt. Gewährleistungskosten für den Kraftfahrzeughersteller und Unterhaltskosten für den Kraftfahrzeughalter werden gesenkt.

Gemäß einer bevorzugten Ausführungsform der vorliegenden Erfindung wird die Parallelschaltung der beiden elektrischen Energiespeicher spannungsneutral ausgeführt.

Mit einer spannungsneutralen Ausführung der Parallelschaltung der beiden elektrischen Energiespeicher wird im vorliegenden Dokument eine Ausführung beschrieben, bei welcher zu keinem Betriebszeitpunkt eine bzw. eine nennenswerte elektrische Spannung an Verbindungs- bzw. Koppelelementen abfällt. Als spannungsneutrale Verschaltung kann insofern beispielsweise eine feste Verdrahtung, ein einfacher Schalter und/oder ein Relais angesehen werden. Im Sinne dieser Spannungsneutralität sind insbesondere spannungswandelnde Bauelemente wie etwa ein Gleichstromsteller oder die beiden elektrischen Energiespeicher teilweise entkoppelnde Schaltersteuerungen ausgeschlossen, die sich auseinander entwickelnde Spannungslagen der beiden elektrischen Energiespeicher während ihres Betriebs zur Folge haben.

Somit kann mit einer derartigen Parallelschaltung ein immenser Kostenvorteil erzielt werden und eine einfache Betriebsstrategie eingesetzt werden. Die Einfachheit der Betriebsstrategie kommt auch in dem weiteren Kostenvorteil zum Ausdruck, dass im Betrieb der Energiespeichervorrichtung die Erfassung der Energiespeicherspannung zur Ermittlung des relativen Ladezustands für einen der beiden elektrischen Energiespeicher ausreicht. Wird beispielsweise die Ruhespannung zwischen den Polen des Blei-Säure-Akkumulators erfasst, ist durch die bekannte Lage der beiden Spannungskennlinien der beiden elektrischen Energiespeicher zueinander der relative Ladezustand des Lithium-Ionen-Akkumulators mit ausreichender Genauigkeit mitbestimmt.

Die Erfindung beruht auf den nachfolgend dargelegten Überlegungen: Zwei elektrochemische Energiespeicher können ohne spannungswandelndes Koppelelement direkt gekoppelt werden, wobei die beiden Energiespeicher ein unterschiedliches, aber aufeinander abgestimmtes Verhalten ihrer Spannungskennlinien in Abhängigkeit von ihrem Ladezustand aufweisen. Diese Charakteristik der beiden Energiespeicher sorgt dafür, dass eine aufwändige Verbindung durch einen DC-DC-Wandler oder Schaltersteuerungen nicht notwendig wird. Dies bedeutet eine ideale, technisch einfach zu realisierende Energiespeichererweiterungen zur Steigerung der Kurzzeitzyklisierungsfähigkeit, einhergehend mit einer erhöhten Komfortverbraucherverfügbarkeit im Stand, einer leistungsfähigen Kurzzeitladungsaufnahmefähigkeit und hohen Ladeeffizienz zur Speicherung von Energie aus einer Bremsenergierückgewinnungsfunktion in Verbindung mit einer bordnetzstabilisierenden Wirkung ohne teure Elektronikumfänge. Zum Beispiel kann die Kopplung umgesetzt werden durch eine ohmsche, kabelgebundene Verbindung einer Blei-Säure-Batterie mit Nennspannung 12 Volt und einer Lithium-Ionen-Batterie mit Nennspannung 14 Volt. Dabei werden die charakteristischen Vorteile zum Beispiel eines Blei-Säure-Akkumulators wie gute Kaltstartfähigkeit und günstiges Kosten-Nutzen-Verhältnis ideal ergänzt.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigt schematisch
- Fig. 1:: Spannungskennlinien von zwei elektrischen Energiespeichern für ein Kraftfahrzeug
- Fig. 2:: Widerstandskennlinien von zwei elektrischen Energiespeichern für ein Kraftfahrzeug

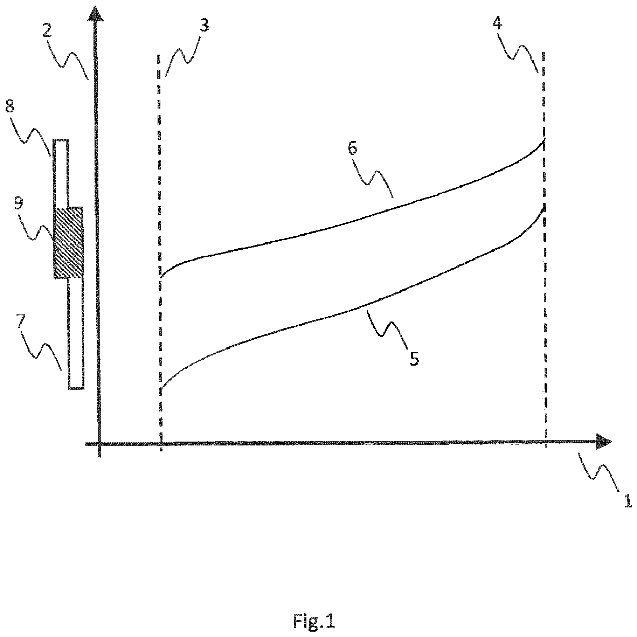

Fig. 1 zeigt den Verlauf einer Spannungskennlinie eines ersten elektrischen Energiespeichers (5), der als sekundäre Blei-Säure-Batterie mit einer Nennspannung von 12 Volt ausgeführt sein kann, aufgetragen in Richtung der Hochwertachse (2) in Abhängigkeit von ihrem relativen Ladezustand (1). Hierbei ist der Bereich des relativen Ladezustands zwischen Entladung (3) des Energiespeichers und Vollladung (4) des Energiespeichers dargestellt, der Bereich einer möglichen Tiefentladung ist nicht dargestellt. Ferner zeigt Fig. 1 den in Richtung der Hochwertachse angetragenen Verlauf einer analogen Spannungskennlinie eines zweiten elektrischen Energiespeichers (6), der als sekundäre Lithium-Ionen-Batterie mit einer Nennspannung von 14 Volt ausgeführt sein kann. Die beiden Spannungskennlinien zeigen die Ruhespannung der elektrischen Energiespeicher im Zustand eines Equilibriums, was bedeutet, dass die Spannung zwischen den Batteriepolen ohne Last oder äußere Ladespannung und nach einem für die Einstellung eines thermischen und chemischen Gleichgewichts ausreichend langen Zeitraum dargestellt ist. Der von der ersten Spannungskennlinie (5) abgedeckte Spannungsbereich (7) und der von der zweiten Spannungskennlinie (6) abgedeckte Spannungsbereich (8) weisen eine Schnittmenge (9) auf, das heißt, nicht der gesamte, von der ersten Spannungskennlinie abgedeckte Spannungsbereich liegt bei größeren Spannungswerten als der von der zweiten Spannungskennlinie abgedeckte Spannungsbereich.

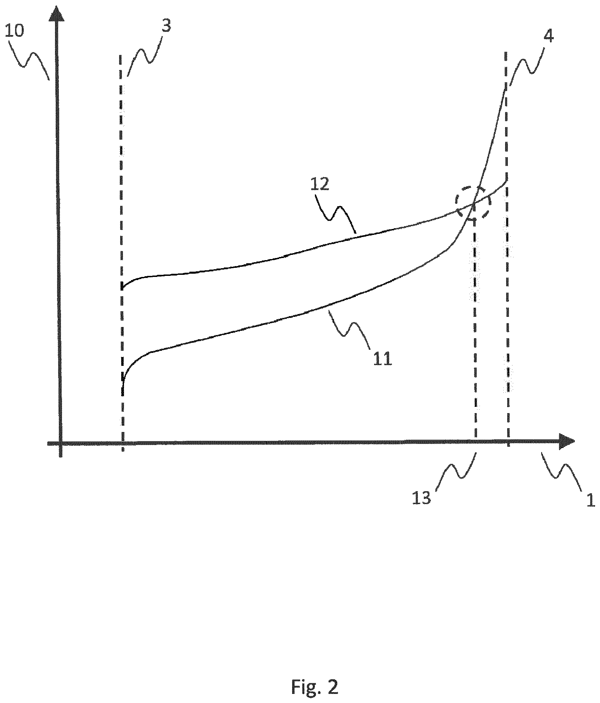

Die Auswahl von zwei elektrischen Energiespeichern anhand der Spannungskennlinien in einer Energiespeichervorrichtung für ein Kraftfahrzeug wird ergänzt durch die Auswahl anhand der Widerstandskennlinien. Fig. 2 zeigt den in Richtung der Hochwertachse (10) aufgetragenen Verlauf des inneren Widerstands des ersten elektrischen Energiespeichers (11) während eines Ladevorgangs. Dieser Verlauf ist aufgetragen gegen den relativen Ladezustand (1) im Bereich zwischen Entladung (3) und Vollladung (4). In analoger Art und Weise ist der Verlauf des inneren Widerstands des zweiten elektrischen Energiespeichers (12) dargestellt. Dem Schnittpunkt der beiden Widerstandskennlinien ist ein Wert des relativen Ladezustands (13) zugeordnet, der als kritischer Ladezustand bezeichnet wird. In der Betriebsstrategie und im Energiemanagement des Kraftfahrzeugs kann der kritische Ladezustand als Steuer- und Regelparameter genutzt werden. Für eine einfache Betriebsstrategie der Energiespeichervorrichtung ist lediglich der Ladezustand der Blei-Säure-Batterie beispielsweise durch eine Spannungsmessung mit einem Batteriesensor zu erfassen. Eine Ladespannung der Energiespeichereinrichtung von beispielsweise 13,3 Volt ist ausreichend, um die Blei-Säure-Batterie voll zu laden, wobei sich die Lithium-Ionen-Batterie nach erfolgter Vollladung der Blei-Säure-Batterie in einem teilentladenen Zustand und bevorzugt unter dem kritischen Ladezustand befindet. Falls sich die Blei-Säure-Batterie bei relativen Ladezuständen über dem kritischen Ladezustand befindet, führt dies bei einem kurzzeitigen Ladepuls, der zum Beispiel um Bremsenergie in einer Rollphase des Kraftfahrzeugs als elektrochemisch gebundene Energie zurückzugewinnen an der Energiespeichervorrichtung anliegt, bevorzugt zur Ladung der Lithium-Ionen-Batterie. Dadurch wird die höhere Ladeeffizienz der Lithium-Ionen-Batterie genutzt und die Blei-Säure-Batterie wird zugunsten ihrer Haltbarkeit weniger zyklisiert.

Durch die geringere Selbstentladung einer Lithium-Ionen-Batterie im Vergleich zu einer Blei-Säure-Batterie und wegen der Lagen der beiden Spannungskennlinien nach Fig. 1 (zweite Spannungskennlinie in Richtung der Hochwerteachse oberhalb erster Spannungskennlinie) wird im Stand des Fahrzeugs die Blei-Säure-Batterie von der Lithium-Ionen-Batterie nachgeladen. Dieser als interne Umladung bezeichnete Effekt ereignet sich, wenn der relative Ladezustand der Blei-Säure-Batterie kleiner als der Wert des kritischen Ladezustands ist. Wegen der teilweisen Überlappung der beiden Spannungskennlinien kann ein Transfer von elektrischer Ladung von der Lithium-Ionen-Batterie zur Blei-Säure-Batterie stattfinden, solange die Lithium-Ionen-Batterie nicht vollständig entladen ist. Durch die interne Umladung wird eine Verweildauer der Blei-Säure-Batterie bei niedrigen Ladezuständen verringert und deshalb die Lebensdauer der Blei-Säure-Batterie erhöht. Im Falle eines Kaltstarts kommt außerdem die hohe Kaltstartfähigkeit der Blei-Säure-Batterie bedingt durch den im Stand nicht oder kaum geminderten, hohen Ladezustand zur Geltung. Die Energiespeichervorrichtung trägt dazu bei, dass die Wahrscheinlichkeit für einen erfolgreichen und möglichst schnellen Kaltstart des Motors des Kraftfahrzeugs erhöht wird. Hierbei werden allerdings keine derart langen Standzeiten vor einem Kaltstart des Motors oder Mikrokurzschlüsse in den elektrischen Energiespeichern betrachtet, die zu einer Tiefentladung der beiden elektrischen Energiespeicher führen. Falls Komfort- und Sicherheitsverbraucher kurzzeitig einen hohen Bedarf an elektrischer Leistung aufweisen, stabilisiert die Energiespeichervorrichtung die Bordnetzspannung ohne den Einsatz von teuren Gleichstromstellern, da beide elektrische Energiespeicher parallel entladen werden und somit ein resultierender Spannungseinbruch an der Energiespeichervorrichtung und im Bordnetz im Vergleich zum Einsatz nur eines der beiden elektrischen Energiespeichers reduziert ist.

## Patentansprüche

1. Energiespeichervorrichtung für ein Kraftfahrzeug mit einem ersten elektrischen Energiespeicher, der charakterisiert ist durch eine erste Spannungskennlinie (5), welche die Ruhespannung (2) des ersten elektrischen Energiespeichers in Abhängigkeit von seinem relativen Ladezustand (1) festlegt, sowie durch eine erste Widerstandskennlinie (11), welche den für einen Ladevorgang des ersten elektrischen Energiespeichers relevanten Innenwiderstand (10) des ersten elektrischen Energiespeichers in Abhängigkeit von seinem relativen Ladezustand (1) festlegt, und mit einem dem ersten elektrischen Energiespeicher parallel geschalteten zweiten elektrischen Energiespeicher, der charakterisiert ist durch eine zweite Spannungskennlinie (6), welche die Ruhespannung (2) des zweiten elektrischen Energiespeichers in Abhängigkeit von seinem relativen Ladezustand (1) festlegt, sowie durch eine zweite Widerstandskennlinie (12), welche den für einen Ladevorgang des zweiten elektrischen Energiespeichers relevanten Innenwiderstand (10) des zweiten elektrischen Energiespeichers in Abhängigkeit von seinem relativen Ladezustand (1) festlegt, **dadurch gekennzeichnet, dass**
- sich der von der ersten Spannungskennlinie abgedeckte Spannungswertebereich (7) und der von der zweiten Spannungskennlinie abgedeckte Spannungswertebereich (8) teilweise überlappen (9) und
- die erste Widerstandskennlinie und die zweite Widerstandskennlinie genau einen Schnittpunkt (13) aufweisen, und dass
- bei Anliegen einer äußeren Ladespannung an der Energiespeichervorrichtung der erste und zweite Energiespeicher parallel geschaltet sind, um in Abhängigkeit von den relativen Ladezuständen das Laden des Energiespeichers mit dem geringeren Ladewiderstand zu bewirken.

2. Energiespeichervorrichtung nach Anspruch 1, **dadurch gekennzeichnet, dass** die erste Widerstandskennlinie im Bereich von relativen Ladezuständen oberhalb des dem Schnittpunkt zugehörigen Werts des relativen Ladezustands, über der zweiten Widerstandskennlinie verläuft.

3. Energiespeichervorrichtung nach Anspruch 2, **dadurch gekennzeichnet, dass** der von der zweiten Spannungskennlinie abgedeckte Spannungswertebereich höhere Spannungswerte beinhaltet als der von der ersten Spannungskennlinie abgedeckte Spannungswertebereich.

4. Energiespeichervorrichtung nach Anspruch 3, **dadurch gekennzeichnet, dass** der erste elektrische Energiespeicher als Blei-Säure-Akkumulator ausgeführt ist und der zweite elektrische Energiespeicher als Lithium-Ionen-Akkumulator oder als Super-Kondensator ausgeführt ist.

5. Energiespeichervorrichtung nach Anspruch 1, **dadurch gekennzeichnet, dass** die Parallelschaltung der beiden elektrischen Energiespeicher spannungsneutral ausgeführt ist.

## Claims

1. An energy storage device for a motor vehicle, comprising a first electrical energy store, which is **characterised by** a first characteristic voltage curve (5), which defines the open-circuit voltage (2) of the first electrical energy store depending on the relative state of charge (1) of the first electrical energy store, and by a first characteristic resistance curve (11), which defines the internal resistance (10) of the first electrical energy store relevant for a charging process of the first electrical energy store depending on the relative state of charge (1) of the first electrical energy store, and comprising a second electrical energy store, which is connected in parallel to the first electrical energy store and which is **characterised by** a second characteristic voltage curve (6), which defines the open-circuit voltage (2) of the second electrical energy store depending on the relative state of charge (1) of the second electrical energy store, and by a second characteristic resistance curve (12), which defines the internal resistance (10) of the second electrical energy store relevant for a charging process of the second electrical energy store depending on the relative state of charge (1) of the second electrical energy store, **characterised in that**
- the voltage value range (7) covered by the first characteristic voltage curve and the voltage value range (8) covered by the second characteristic voltage curve (9) partially overlap (9), and
- the first characteristic resistance curve and the second characteristic resistance curve have exactly one point of intersection (13), and **in that**
- with application of an external charging voltage to the energy storage device, the first and second energy stores are connected in parallel so as to bring about the charging of the energy store with the lower charging resistance depending on the relative states of charge.

2. An energy storage device according to claim 1, **characterised in that** the first characteristic resistance curve runs above the second characteristic resistance curve in a region of relative states of charge above the value of the relative state of charge associated with the point of intersection.

3. An energy storage device according to claim 2, **characterised in that** the voltage value range covered by the second characteristic voltage curve contains higher voltage values than the voltage value range covered by the first characteristic voltage curve.

4. An energy storage device according to claim 3, **characterised in that** the first electrical energy store is embodied as a lead-acid battery and the second electrical energy store is embodied as a lithium-ion battery or as a supercapacitor.

5. An energy storage device according to claim 1, **characterised in that** the parallel connection of the two electrical energy stores is established at neutral potential.

## Revendications

1. Dispositif accumulateur d'énergie destiné à un véhicule comprenant un premier accumulateur d'énergie électrique qui est **caractérisé par** une première courbe caractéristique de tension (5) qui représente les variations de la tension de repos (2) du premier accumulateur d'énergie électrique en fonction de son état de charge relatif (1), ainsi que par une première courbe caractéristique de résistance (11) qui représente les variations de la résistance interne (10) du premier accumulateur d'énergie électrique pertinente pour un processus de charge de celui-ci en fonction de son état de charge relatif (1), ainsi qu'un second accumulateur d'énergie électrique branché parallèlement au premier accumulateur d'énergie électrique et qui est **caractérisé par** une seconde courbe caractéristique de tension (6) qui représente les variations de la tension de repos (2) du second accumulateur d'énergie électrique en fonction de son état de charge relatif (1) ainsi que par une seconde courbe caractéristique de résistance (12) qui représente les variations de la résistance interne (10) du second accumulateur d'énergie électrique pertinente pour un processus de charge de celui-ci en fonction de son état de charge relatif (1),
**caractérisé en ce que**
la plage de valeurs de tension (7) couverte par la première courbe caractéristique de tension et la plage de valeurs de tension (8) couverte par la seconde courbe caractéristique de tension se chevauchent partiellement (9),
la première courbe caractéristique de résistance et la seconde courbe caractéristique de résistance comportent un et un seul point d'intersection (13), et
en cas de demande d'une tension de charge externe au dispositif accumulateur d'énergie, le premier accumulateur d'énergie et le second accumulateur d'énergie sont branchés en parallèle pour obtenir, en fonction des états de charge relatifs la charge de l'accumulateur d'énergie avec la résistance de charge la plus faible.

2. Dispositif accumulateur d'énergie conforme à la revendication 1,
**caractérisé en ce que**
dans la plages d'états de charge relatifs, situés au-dessus de la valeur de l'état de charge relatif correspondant au point d'intersection, la première courbe caractéristique de résistance est située au-dessus de la seconde courbe caractéristique de résistance.

3. Dispositif accumulateur d'énergie conforme à la revendication 2,
**caractérisé en ce que**
la plage de valeurs de tension couverte par la seconde courbe caractéristique de tension renferme des valeurs de tension plus élevées que la plage de valeurs de tension couverte par la première courbe caractéristique de tension.

4. Dispositif accumulateur de tension conforme à la revendication 3,
**caractérisé en ce que**
le premier accumulateur d'énergie électrique est réalisé sous la forme d'un accumulateur plomb acide tandis que le second accumulateur d'énergie électrique est réalisé sous la forme d'un accumulateur lithium-ions ou d'un super condensateur.

5. Dispositif accumulateur d'énergie conforme à la revendication 1,
**caractérisé en ce que**
le montage en parallèle des deux accumulateurs d'énergie électrique est neutre en tension.
